# EUROPÄISCHE PATENTANMELDUNG

(11) **EP 0 711 007 A2**
(43) Veröffentlichungstag der Anmeldung: **08.05.1996**
(21) Anmeldenummer: 95106431.0
(22) Anmeldetag: 28.04.1995
(51) Int. Cl.: H01R 13/56

(54) **Kabelschutzelement**

(30) Priorität: 01.11.1994 DE 9418157 U
(71) Anmelder: KRONE Aktiengesellschaft, D-14167 Berlin (DE)
(72) Erfinder: Long, Simon John, Gloucester, Gloucestershire GL4 7TZ (GB)

(57) **Zusammenfassung**

Die Erfindung betrifft ein Kabelschutzelement, das einen Schutz vor Beschädigungen flexibler Kabel gewährt. Insbesondere in Geräten oder Schaltschränken sollen Kabelbrüche oder Verletzungen der Isolation verhindert werden.

Um ein Schutzelement für Kabel zu schaffen, das einfach aufgebaut und montierbar ist sowie eine universelle lokale Verwendung ermöglicht, umschließt ein Element (1, 9) zumindest teilweise den Umfang des Kabels (2) und weist einen Mindestbiegeradius des Kabels (2) sichernde Gestalt auf oder gibt den minimalen Biegeradius des Kabels (2) vor.

## Beschreibung

Die Erfindung betrifft ein Kabelschutzelement, das einen Schutz vor Beschädigungen flexibler Kabel gewährt. Insbesondere in Geräten oder Schaltschränken sollen Kabelbrüche oder Verletzungen der Isolation verhindert werden.

So sind aus DE 42 06 016 und DE 39 14 933 ein Anschlußelement mit einem mehrteiligen Gehäuse zur Aufnahme eines elektrischen Leiters und ein Formstück zur richtungsgebenden Führung von Leitungsschutzschläuchen bekannt. In beiden Fällen wird ein mehrteiliger Aufbau vorgeschlagen, der zusätzliche Verbindungs- bzw. Befestigungselemente erforderlich macht. Außerdem sind diese bekannten Elemente dazu vorgesehen im Bereich von Anschlußelementen eingesetzt zu werden.

In der DE 31 01 558 ist eine Vorrichtung zum Halten von Kabeln, Leitungen, Schläuchen oder dergleichen beschrieben, die ein Abknicken oder Abbrechen an Austrittsstellen verhindern soll. Hierzu wird ein biegsames Verlängerungsstück mit eine Mindestlänge vorgeschlagen. Dabei wird das Verlängerungsstück wendelförmig ausgeführt. Eine Anpassung an bestimmte minimale Biegeradien, die nicht unterschritten werden sollen ist dabei nicht gegeben.

Aufgabe der Erfindung ist es daher, ein Schutzelement für Kabel zu schaffen, das einfach aufgebaut und montierbar ist sowie eine universelle lokale Verwendung ermöglicht.

Erfindungsgemäß wird diese Aufgabe durch die im kennzeichnenden Teil des Anspruchs 1 genannten Merkmale gelöst. Vorteilhafte Ausgestaltungen und Weiterbildungen der Erfindung ergeben sich bei Verwendung der in den untergeordneten Ansprüche enthaltenen Merkmale.

Dabei wird das Schutzelement so ausgebildet, daß es zumindest teilweise den Umfang des Kabels umschließt. Es weist dazu eine einen minimalen Biegeradius des Kabels sichernde Gestalt auf oder gibt den minimalen Biegeradius des Kabels vor.

Vorteilhaft ist eine einteilige Ausgebildung.

Hierzu kann ein Hohlraum, in den das Kabel aufgenommen ist, vorhanden sein, dieser gibt den minimalen Biegeradius, der nicht unterschritten werden soll, vor. Das Schutzelement ist dabei aus einem Material, das eine ausreichende Stabilität aufweist, um die vorgegebene Form auch nach dem Aufstecken auf das Kabel beizubehalten.

Der minimale Biegeradius sollte das vierfache des Kabeldurchmessers nicht unterschreiten.

Das Schutzelement kann eine sich in Längsrichtung erstreckende Aufnahmeöffnung aufweisen, durch die das Kabel in das Schutzelement einführbar ist. Dabei können vorteilhaft an den Rändern der Aufnahmeöffnung Halteelemente vorhanden sein, die einen sicheren Halt des Kabels und ein Einführen gewährleisten.

Beim Einstecken des Kabels von Hand, kann der gewünschten Biegerichtung des Kabels durch einfache Ausrichtung des Schutzelementes Rechnung getragen werden.

Für einen universellen Einsatz auch zur Verbindung mit Zusatzelementen, wie z.B. Kupplungen oder Steckverbinder, kann zumindest eine Arretierung an einer Längsseite vorhanden sein, die eine feste und sichere Verbindung zwischen Kabel und Zusatzelement garantiert. Die Arretierung kann dabei so ausgeführt sein, daß eine form- und/oder kraftschlüssige Verbindung herbeiführbar ist. Eine Möglichkeit dazu ist eine ringförmige Aussparung in der inneren Mantelfläche des Schutzelementes, in die eine entsprechend ausgebildete Aufweitung am Zusatzelement oder einem zusätzlichen Kupplungselement eingreifen kann. Das führt zu einer einfachen Herstellbarkeit der Verbindung.

Mit einem so ausgebildeten Schutzelement kann eine Beschädigung des Kabels an jeder beliebigen Stelle, auch bei nachträglicher Anbringung auf einfache Weise erreicht werden. Mit Hilfe der Aufnahmeöffnung können visuell auch im angebrachten Zustand auf dem Kabel vorhandene Kennzeichnungen oder auch die Farbe erkannt werden. Zur zusätzlichen Kenntlichmachung können verschiedenfarbige Schutzelemente verwendet werden. Ebenso besteht die Möglichkeit, beispielsweise in der Aufnahmeöffnung Etiketten mit zusätzlichen Informationen zu befestigen.

Das Schutzelement kann aber auch so ausgebildet sein, daß das Kabel in einem schlauchartig ausgebildeten elastischen Grundkörper aufnehmbar ist, an dessen äußerer Mantelfläche parallel zueinander angeordnete Ringscheiben vorhanden sind, deren Abstand voneinander, gemeinsam mit dem Außendurchmesser der Ringscheiben den kleinsten möglichen Biegeradius vorgeben.

Bevorzugt ist ein solches Schutzelement zumindest teilweise transparent ausgebildet, so daß Kabelkennungen bzw. zumindest die Farbe des Kabels von außen erkennbar ist. Im übrigen kann auch ein solches flexibles Schutzelement in verschiedenen Farben verwendet werden.

Um eine Längsverschiebung des Kabels im erfindungsgemäßen Schutzelement zu verhindern, können im Inneren des Grundkörpers oder auch im Hohlraum Konturierungen vorhanden sein oder ein Haftvermittler aufgetragen sein.

Nachfolgend soll die Erfindung an Ausführungsbeispielen näher beschrieben werden.

Dabei zeigt:
- Figur 1: ein erfindungsgemäßes Beispiel eines stabilen aufsteckbaren Schutzelementes und
- Figur 2: ein zweites Ausführungsbeispiel eines flexibel ausgebildeten Schutzelementes.

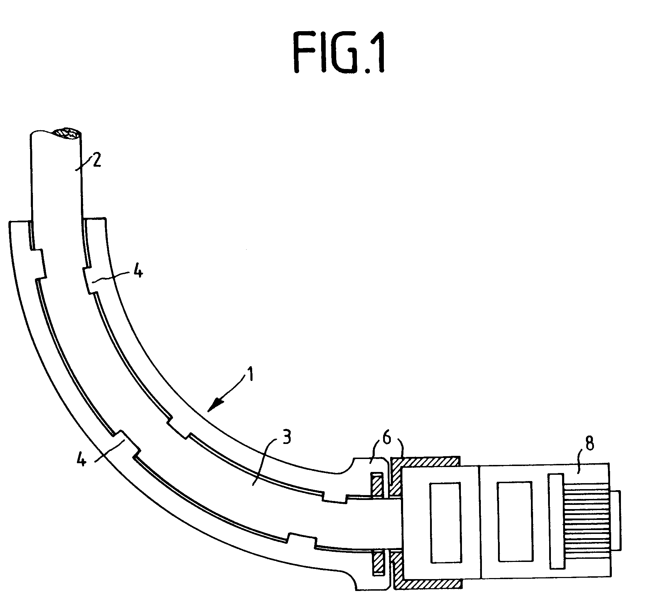

Das in der Figur 1 gezeigte Schutzelement 1 besteht bevorzugt aus einem relativ festen Kunststoff und kann nachträglich an beliebiger Stelle auf das Kabel 2 aufgesteckt werden. Hierzu ist eine über die gesamte Länge reichende Aufnahmeöffnung vorhanden, die einen Hohlraum zur Aufnahme des Kabels 2 teilweise freigibt. Zur Verbesserung des Haltes, sind an den Rändern der Aufnahmeöffnung 3 Halteelemente 4 vorhanden, die den freien Querschnitt teilweise verengen. Die Halteelemente 4 sollten gegenüberliegend und versetzt zueinander angeordnet sein. Die Dimensionierung kann dabei so sein, daß Kabel in einem Durchmesserbereich mit solchen Schutzelementen bestückt werden können.

Weiter ist bei diesem Beispiel eine Arretierung 6 zur Verbindung eines Zusatzelementes 8, in diesem Fall einem Steckverbinder, vorhanden. Dabei ist an der einen Stirnseite des Schutzelementes 1 eine ringförmige Ausparung, von der der gesamte Durchmesser freizugänglich ist, vorhanden. In diese Aussparung kann quer zur Längssachse eine entsprechend ausgebildete Aufweitung eines Kupplungselementes, das fest mit dem Zusatzelement 8 verbunden oder form- und/oder kraftschlüssig an diesem gehalten ist, von der offenen Seite eingeführt werden. Dabei können nicht dargestellte Verriffelungen am Zusatzelement 8 und am Kupplungselement hilfreich sein.

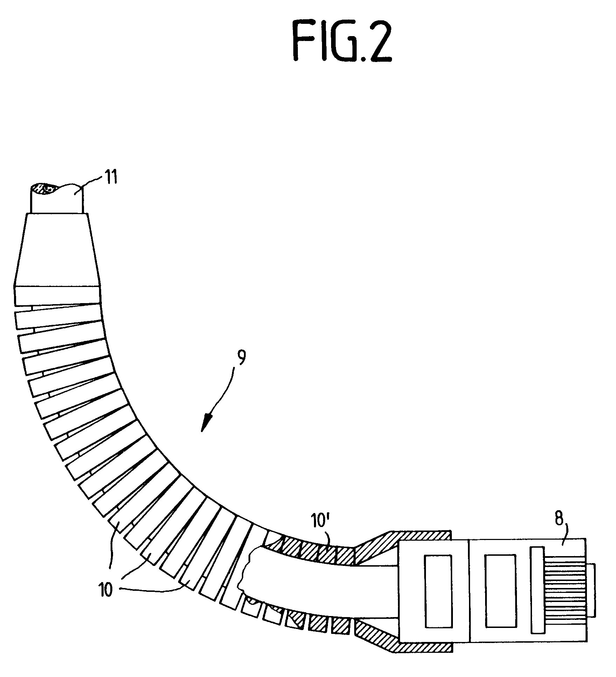

Das in der Figur 2 dargestellte Ausführungsbeispiel eines Schutzelementes 9, besteht zumindest teilweise aus einem flexiblen Material, was zumindest für den Grundkörper 11 zutrifft. An der äußeren Mantelfläche des Grundkörpers 11 sind diesen in radialer Richtung überragende Ringscheiben 10 vorhanden. Die in Außendurchmesser und Abstand zueinander so abgestimmt sind, daß eine Biegung nur in soweit möglich wird, daß der minimale Biegeradius nicht unterschritten wird, da wie dargestellt, in Biegerichtung die Ringscheiben 10' aneinanderstoßen und eine weitere Bewegung in diese Richtung unmöglich wird.

Auch bei diesem Beispiel besteht die Möglichkeit der Verbindung mit einem Zusatzelement 8. Dabei kann wegen des elastischen Materials eine Längsseite des Schutzelementes 9 so geformt sein, daß eine kraft- und formschlüssige Verbindung erreichbar ist.

## Patentansprüche

1. Kabelschutzelement mit einem zur Aufnahme eines Kabels ausgebildeten Hohlraum,
dadurch **gekennzeichnet**,
daß das Element (1, 9) zumindest teilweise den Umfang des Kabels (2) umschließt und einen Mindestbiegeradius des Kabels (2) sichernde Gestalt aufweist oder den minimalen Biegeradius des Kabels (2) vorgibt.

2. Kabelschutzelement nach Anspruch 1, dadurch gekennzeichnet, daß das Element (1, 9) einteilig ausgebildet ist.

3. Kabelschutzelement nach Anspruch 1 oder 2, dadurch gekennzeichnet, daß das Element (1, 9) einen mit der Form des minimalen Biegeradius ausgebildeten Hohlraum zur Aufnahme des Kabels (2) aufweist.

4. Kabelschutzelement nach einem der Ansprüche 1 bis 3, dadurch gekennzeichnet, daß das Element (1) eine sich in Längsrichtung erstreckende Aufnahmeöffnung (3) aufweist, durch die das Kabel (2) einführbar ist.

5. Kabelschutzelement nach einem der Ansprüche 1 bis 4, dadurch gekennzeichnet, daß an den Rändern der Aufnahmeöffnung (3) Halteelemente (4) angeordnet sind, die den freien Querschnitt zumindest teilweise so verengen, daß das aufgenommene Kabel (2) sicher gehalten ist.

6. Kabelschutzelement nach einem der Ansprüche 1 bis 5, dadurch gekennzeichnet, daß auf der Umfangsfläche des Hohlraums zumindest teilweise ein Haftvermittler aufgebracht ist.

7. Kabelschutzelement nach einem der Ansprüche 1 bis 5, dadurch gekennzeichnet, daß auf der Umfangsfläche des Hohlraums zumindest teilweise eine formschlüssig die Bewegung des Kabels (2) behindernde Konturierung vorhanden ist.

8. Kabelschutzelement nach einem der Ansprüche 1 bis 7, dadurch gekennzeichnet, daß an mindestens einer Längsseite eine Arretiereinrichtung (6) vorhanden ist.

9. Kabelschutzelement nach Anspruch 8, dadurch gekennzeichnet, daß die Arretiereinrichtung (6) eine Aufnahme aufweist, in die ein die Relativbewegung des Elementes (1) und eines Zusatzelementes (8) verhinderndes Kupplungselement (7) des Zusatzelementes (8) form- und/oder kraftschlüssig eingreifen kann.

10. Kabelschutzelement nach einem der Ansprüche 1 bis 3, dadurch gekennzeichnet, daß das Kabel (2) in einem schlauchartig ausgebildeten elastischen Grundkörper (11) aufnehmbar ist, an dessen äußerer Mantelfläche parallel zueinander angeordnete Ringscheiben (10) vorhanden sind, deren Abstand voneinander, gemeinsam mit dem Außendurchmesser der Ringscheiben (10) den kleinsten möglichen Biegeradius vorgeben.

11. Kabelschutzelement nach einem der Ansprüche 1 bis 3 und 10, dadurch gekennzeichnet, daß im Inneren des Grundkörpers (11) eine Längverschiebung des Kabels (2) verhindernde Konturierung vorhanden ist.

12. Kabelschutzelement nach einem der Ansprüche 1 bis 3 und 10, dadurch gekennzeichnet, daß im Inneren des Grundkörpers (11) zumindest teilweise ein Haftvermittler aufgetragen ist.

13. Kabelschutzelement nach einem der Ansprüche 1 bis 3 und 10 bis 12, dadurch gekennzeichnet, daß das Element (9) zumindest teilweise aus einem transparenten Material besteht.

14. Kabelschutzelement nach einem der Ansprüche 1 bis 3 und 10 bis 13, dadurch gekennzeichnet, daß das Element (9) zumindest an einer Längsseite zur form- und/oder kraftschlüssigen Verbindung mit einem Zusatzelement (8) ausgebildet ist.
